# EUROPEAN PATENT APPLICATION

(11) **EP 2 202 501 A1**
(43) Date of publication of application: **30.06.2010**
(21) Application number: 08022373.8
(22) Date of filing: 23.12.2008
(51) Int. Cl.: G01L 5/16

(54) **Hollow piezoelectric device for distingishing forces and torques**

(71) Applicant: ETH Zurich, 8092 Zürich (CH)
(72) Inventor: Kosa, Gabor, 6963 Pregassona (CH)

(57) **Abstract**

A piezoelectric sensor device (1) is disclosed that is adapted to determining and distinguishing loads in the form of forces and torques associated with at least four different degrees of freedom. The device (1) comprises a hollow main body (3), which may take the form of a hollow cylinder, the main body comprising at least one piezoelectric portion. Electrodes (5,51-57) are applied to the piezoelectric portion and distributed over the inside and outside of the main body (3) in a manner to allow to selectively detect surface charge distributions corresponding to loads associated with at least four different degrees of freedom by measuring voltage differences between the electrodes. A method of use of such a device is also disclosed.

## Description

### TECHNICAL FIELD

The present invention relates to a sensor device that is adapted to distinguish forces and torques. The invention further relates to methods of use of such a device.

### PRIOR ART

Piezoelectric actuators of tubular shape are commonly used in scanning probe microscopy (SPM), in particular, scanning tunneling microscopy (STM). An actuator of this kind is shown, e.g., in Figs. 7A to 7C of US 5,376,790 to Linker et al. The actuator comprises a hollow cylinder made from a piezoelectric material. Four segmented outer electrodes are distributed over the circumference of the outer wall, each electrode extending in the longitudinal direction of the cylinder and covering one quadrant, while one continuous inner electrode covers the interior of the tube. The application of voltages of opposite sign to opposing outer electrodes causes opposing quadrants of the cylinder to expand and contract, respectively, thereby causing the cylinder to bend in a transverse (x or y) direction. The application of a uniform voltage between all outer electrodes and the inner electrode causes the cylinder to expand or contract in the axial (z) direction. Accordingly, such an actuator may be used for positioning an object such as a SPM tip in three spatial dimensions, i.e., for obtaining displacements along all three translational degrees of freedom (DOF). Similar devices are disclosed in US 5,912,461 to Ando et al., in US 5,524,354 to Bartzke et al. or in US 6,194,813 to Israelachvili. These documents are silent about detection of forces or torques.

US 5,574,278 to Poirier discloses a tubular piezoelectric element having an actuator portion, the actuator portion comprising four segmented outer electrodes, and a detector portion, the detector portion comprising a single, ring-shaped outer electrode. This device serves to generate displacements for the two transverse translational degrees of freedom and to detect forces associated with the third, axial translational degree of freedom. No detection of torques is described.

US 2004/0217671 discloses a tubular piezoelectric transducer that is rolled from an electroactive polymer. The document is silent about torque detection.

In US 4,513,437 to Chainer et al., a tubular piezoelectric element with four segmented outer electrodes is used for detecting transverse accelerations in a data input pen for the two transverse translational degrees of freedom. No distinction is made between forces and torques.

In addition to tubular piezo actuators, also bimorph actuators are known from the prior art. R. Pérez et al., "Modeling, Fabrication, and Validation of a High-Performance 2-DoF Piezoactuator for Micromanipulation", IEEE/ASME Transactions on Mechatronics, Vol. 10, No. 2, April 1005, pp. 161-171 discloses a micromanipulator comprising two fingers. Each finger comprises a parallel piezoelectric bimorph having a top and a bottom piezoelectric layer with a central electrode between them. The top and bottom layers are provided with two parallel surface electrodes each. By applying voltages to these electrodes in a particular manner, displacements along two orthogonal spatial directions are generated. No sensing applications are disclosed.

International application PCT/EP08/05399 of July 2, 2008, claiming priority from U.S. provisional application No. 60/958,528 of July 6, 2007, was filed before the present application but will be published only after its priority date. The disclosure of this application is incorporated herein by reference in its entirety. This application discloses a piezoelectric bimorph having an upper and a lower piezoelectric layer, at least three outer electrodes being disposed on top of the upper layer and at least one electrode being disposed on the bottom of the lower layer, to enable generation or detection of loads (forces and/or torques) associated with three or more degrees of freedom. However, the compact form of a piezoelectric bimorph is not always optimal, e.g., if it is desired to combine the device with an element, e.g. a tool, that extends along the same direction as the long axis of the device. In such situation, it may be difficult to pass the element past the device without interfering with operation of the device.

### SUMMARY OF THE INVENTION

The present invention provides a hollow piezoelectric sensor device that is capable of distinguishing forces and torques. Such a device may be utilized in a variety of different applications, in particular, in applications that require an element to be disposed in parallel to the device.

In particular, the invention provides a sensor device as defined in claim 1. The device comprises:
(a) a piezoelectric device comprising:
   a hollow main body defining a hollow region, the main body having an inner surface facing the hollow region and an outer surface facing away from the hollow region, the main body comprising at least one piezoelectric portion made from a piezoelectric material; and
   a set of electrodes on the piezoelectric portion, the electrodes being distributed over the inner surface and the outer surface of the main body in a manner to allow to distinguish surface charge distributions corresponding at least to a force along a first direction and to a torque around a second direction perpendicular to the first direction, and
(b) a signal processing device electrically connected to the set of electrodes, the signal processing device being specifically adapted to receive a plurality of input values corresponding to potential differences between the electrodes and to determine from said input values at least two output values, the output values representing said force along the first direction and said torque around the second direction.

Many different distributions of the electrodes are possible in order to be able to distinguish charge distributions associated with a force and a torque, and no simple general definition can be given. However, some considerations may be worth to be noted. Forces and torques are generally associated with different stress/strain profiles in the piezoelectric material, thus giving rise to different distributions of surface charges on the surfaces of the piezoelectric material. The electrodes should be arranged in a manner to pick up and distinguish these different surface charges. It will be readily apparent to a skilled person that there is an infinite number of electrode arrangements that will be adapted to pick up these surface charges in an appropriate manner.

In preferred embodiments, the piezoelectric device will have a generally elongated shape, with a first end, a second end, and a longitudinal axis extending from the first end to the second end. Generally, the hollow space will extend in the longitudinal direction. It may be open at least at the first or second end (e.g., take the form of a blind hole). Preferably it is open at both ends (e.g., taking the form of a through hole, in particular, of a cylindrical bore with arbitrary, in particular circular, polygonal or rectangular cross sectional shape). Distinction of charge distributions corresponding to loads associated with a force and a torque is possible, in particular, if there are at least two electrodes on the same (inner or outer) surface covering a sector along the circumferential direction around the longitudinal direction and being distributed along the axial direction along the longitudinal axis (i.e., being placed at different positions along the axial direction), in addition to least one (reference) electrode on the other surface. In particular, it is then possible to distinguish a force along a first transverse axis perpendicular to the longitudinal axis from a moment around a second transverse axis perpendicular to the longitudinal axis and to the first transverse axis. If there are at least four electrodes on the same (inner or outer) surface that are distributed along the axial and that cover different sectors on the circumferential direction, in addition to at least one electrode on the other surface, it will be possible to distinguish forces along both transverse axes and torques around both transverse axes (four degrees of freedom).

In particular, the set of electrodes may comprise a first and a second subset of electrodes, the electrodes of both subsets being present on the same surface, i.e., either on the inner surface or on the outer surface. In addition, the set of electrodes may comprise at least one electrode on the other surface facing the electrodes from both subsets across the piezoelectric material. Each subset then preferably comprises at least two electrodes at different positions along a circumferential direction around the device axis, and each electrode of the second subset is shifted along the longitudinal axis with respect to each electrode of the first subset. The concept of the electrodes being "shifted" may include a situation wherein each two electrodes from the first and second subset may partially overlap in a projection on the longitudinal axis, or wherein no overlap exists at all. Preferably there are at least two electrodes within each subset that point to different spatial directions, i.e. the surface areas of the main body to which these electrodes are applied have different normal vectors.

Separation of the contributions from/to loads corresponding to the different degrees of freedom (forces or torques) is much simplified if each of the first and second subsets of electrodes comprises the same number of electrodes. In preferred embodiments, each subset comprises at least three, more preferably at least four electrodes; in particular, each subset may consist of exactly four electrodes.

Preferably, all electrodes of the first and second subset have the same surface area to further simplify separation of the contributions to electrode voltages corresponding to different degrees of freedom. Preferably, each electrode of the first subset is disposed in a axially neighboring arrangement to an electrode of the second subset. Separation of the contributions from/to loads associated with different degrees of freedom is further simplified if each electrode in each subset of electrodes is disposed in an opposing arrangement to a further electrode in the same subset, the electrodes facing each other along a transverse direction perpendicular to the longitudinal axis.

In a preferred embodiment, the main body has a hollow cylindrical shape, in particular, the shape of a hollow circular cylinder. The main body may consist completely of the piezoelectric material. The hollow cylindrical shape defines a longitudinal direction and an inner and an outer circumferential surface. The inner circumferential surface then forms the inner surface of the main body, and the outer circumferential surface forms the outer surface of the main body. The cylinder may have arbitrary (circular, oval/elliptic or even polygonal) cross section. The cross section of the hollow space my be different from the shape of the outer circumference.

For a cylindrical shape, it is preferred that the electrodes of each subset are distributed uniformly along the circumferential direction, i.e., the electrodes of each subset are placed at equal distances over the circumference of the cylinder. In particular, if there are four electrodes in each subset, each electrode of each subset is disposed on one quadrant of the inner or (preferably) outer circumferential surface of the cylinder.

In a particularly preferred embodiment, the set of electrodes comprises an inner electrode on the inner circumferential surface and two subsets of at least three, preferably of four outer electrodes of substantially equal size and shape, each electrode being disposed on a predetermined segment of the cylinder surface, the electrodes of each subset being located in a substantially identical axial position and being distributed equally over the outer circumferential surface, each electrode of the first subset being adjacent (side-by-side) to a corresponding electrode of the second subset along the longitudinal direction. In particular, each of the outer electrodes will then preferably have a rectangular shape.

In another embodiment, the main body comprises a first piezoelectric layer having an inner surface and an outer surface, a second piezoelectric layer having an inner surface and an outer surface, and a hollow spacer disposed between the inner surface of the first piezoelectric layer and the inner surface of the second piezoelectric layer. The set of electrodes comprises at least one outer electrode on the outer surface of each of the first and second piezoelectric layers, and at least one inner electrode on the inner surface of the first piezoelectric layer and the inner surface of the second piezoelectric layer. The inner surfaces of the two piezoelectric layers may be in contact with the same inner electrode(s), or they may be in contact with different inner electrodes.

In particular, the hollow spacer may itself be made from an electrically conducting material, forming the inner electrode of the piezoelectric device, only one single common inner electrode then being provided.

In a particularly preferred embodiment, the set of electrodes comprises four outer electrodes disposed on the outer surface of the first piezoelectric layer and four outer electrodes disposed on the outer surface of the second piezoelectric layer, the outer electrodes on the outer surfaces of each piezoelectric layer having identical shape and size (preferably rectangular), the electrodes on each of the first and second layers being arranged in identical rectangular arrangements, and each outer electrode on the first piezoelectric layer facing a corresponding outer electrode on the second piezoelectric layer across the spacer.

In order to protect the piezoelectric layers and the electrodes, the device may comprise a polymer coating and/or a polymer casing in which these components are embedded.

Force induction elements may be provided to facilitate the transmission of forces from and to the piezoelectric device. In such embodiments, the main body has a first end, a second end, and a longitudinal axis extending from the first end to the second end, the hollow portion extends along the longitudinal axis, and the device comprises at least a first force induction element disposed near the first end of said main body. Preferably, also a second force induction element disposed near the second end of the main body is provided. In particular, the force induction elements may be disk or tube shaped, the disk axis coinciding with the long axis of the piezoelectric layers. In the case of disks, the disks may have arbitrary shapes (circular, polygonal etc.). The force-induction elements will preferably have openings permitting access to the hollow space of the piezoelectric device.

For improving signal quality, signal conditioning circuits may be provided. Each signal conditioning circuit will have an input being connected to at least one of said electrodes and having an output being connected to a data acquisition device for digitizing said input values, each signal conditioning circuit acting as an impedance converter having an input impedance that is higher than its output impedance.

The present invention also encompasses methods of use of a piezoelectric device as defined above for determining both forces and torques.

In particular, the invention encompasses a method for determining and distinguishing at least a force along a first direction and a torque around a second direction perpendicular to the first direction, the method comprising:
- providing a hollow piezoelectric device as defined above;
- optionally, providing a tool or any other item in the hollow space;
- applying a load to the piezoelectric device;
- determining voltage differences between the electrodes;
- from the voltage differences, determining contributions to the load associated with said force and said torque.

In yet another aspect, a method of self-testing of a piezoelectric device as defined above is provided. The method comprises:
applying an excitation voltage between at least two of the electrodes to excite a movement of the piezoelectric device;
measuring a response voltage between at least two of the electrodes in response to said movement; and
determining whether the response voltage is within a predetermined expected range.

The response voltage may be measured simultaneously with application of the excitation voltage. In this case, at least one of the electrodes at which the response voltage is measured is different from the electrodes to which an excitation voltage is applied. However, it is also possible to measure the response voltage after application of the excitation voltage, for the same or for different electrodes than those to which the excitation voltage was applied.

### BRIEF DESCRIPTION OF THE DRAWINGS

Preferred embodiments of the invention are described in the following with reference to the drawings, in which:
- Figs. 1 and 2: show different perspective views of a piezoelectric device according to a first preferred embodiment;
- Fig. 3: shows a front plan view of the device of Fig. 1;
- Fig. 4: shows a perspective view of the device of Fig. 1, together with tubular force induction elements;
- Fig. 5: shows a longitudinal sectional view of the device of Fig. 1, together with a single tubular force induction and protection element;
- Fig. 6: shows a schematic longitudinal sectional view of the device as in Fig. 5, together with a rod-shaped tool passed through its bore;
- Fig. 7: shows the device of Fig. 1, together with disk-shaped force induction elements;
- Fig. 8: shows a schematic longitudinal sectional view of the device as in Fig. 8, together with a highly schematic sketch of an evaluation device;
- Fig. 9: shows a schematic front plan view of the device of Fig. 8;
- Fig. 10: shows a perspective view of a piezoelectric device according to a second preferred embodiment;
- Fig. 11: shows a front plan view of the device of Fig. 10;
- Fig. 12: shows an illustration of selected strain profiles in the device;
- Fig. 13: shows a schematic top plan view of an alternative electrode arrangement;
and
- Fig. 14: shows a schematic setup for a signal conditioning circuit.

### DESCRIPTION OF PREFERRED EMBODIMENTS

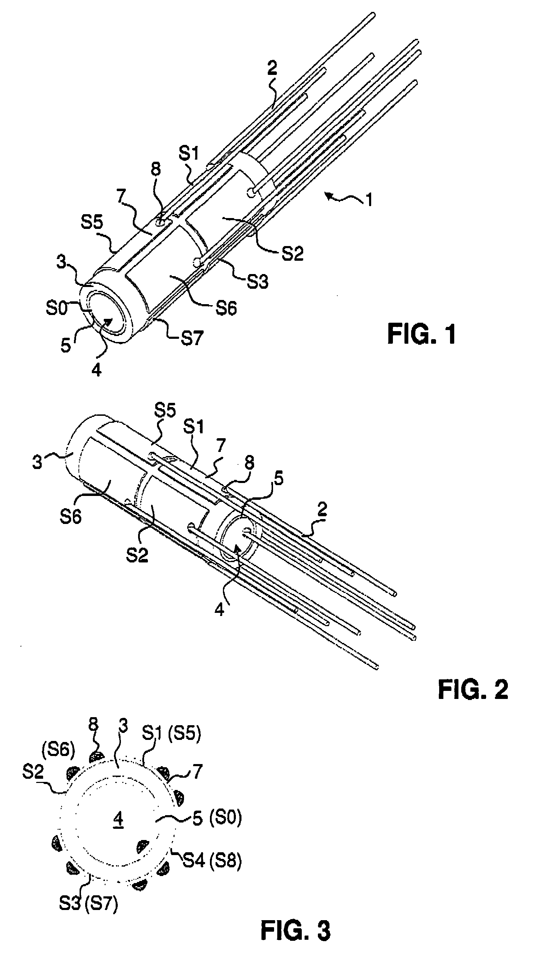

In Figures 1 to 3, a first preferred embodiment of a piezoelectric device particularly suited as a multidirectional sensor is shown. The device 1 comprises a tube 3 of circular-cylindrical shape, made from a piezoelectric material such as PZT (lead zirconium titanate) or a polymer material such as PVDF (polyvinylidene fluoride). An inner electrode 5 (reference electrode) is applied to the inner surface of the piezoelectric tube 3 and fully covers this inner surface. A central hollow space or bore 4 extends through the device, the bore being bounded by the inner electrode 5. The inner electrode 5 will in the following also be designated as S0. Eight outer electrodes 7 are distributed over the outer circumferential surface of the tube 3. These electrodes will in the following be designated as electrodes S1 to S8. All electrodes are electrically conductive and are in electrical contact with the piezoelectric material. The electrodes may be made, e.g., of a metal or of a conductive polymer and may be attached to the piezoelectric tube by any suitable method, such as vacuum deposition techniques or bonding. A connecting wire 2 is connected to each electrode at a connection 8, e.g., by soldering, in order to measure voltage differences between the electrodes and/or to provide exciting voltages to the electrodes.

In the following, directions are identified as follows: The longitudinal (cylinder) axis of the device is designated as the z axis. The mutually orthogonal transverse directions perpendicular to the longitudinal axis are designated as the x and y directions, respectively. It is to be noted that the designation of directions is different from that of PCT/EP08/05399 for the sake of consistency with traditional usage of directions in situations where there is an exact or approximate axis of symmetry, such as here. The designation of directions given here will be adhered to throughout this document.

The device shows in Figure 1 to 3 is particularly suited for distinguishing and determining forces applied to it along the longitudinal (z) axis or along any of the two transverse (x, y) axes, and for distinguishing and determining torques (moments) applied to it around the transverse (x, y) axes. In other words, the device is adapted to be used as a sensor for distinguishing and determining loads in the form of forces and torques associated with five different degrees of freedom.

Here, the term "degree of freedom" is to be understood as it is normally used in the field of mechanics. In particular, the degrees of freedom of a rigid body are defined as the set of independent translations and rotations that specify completely any displaced position and orientation of the body. A rigid body generally has six degrees of freedom: three translational degrees of freedom and three rotational degrees of freedom. A change in the state of a body with respect to a translational degree of freedom is associated with force in a certain direction, while a change in the state of the body with respect to a rotational degree of freedom is associated with a torque (moment) around a certain direction.

The eight outer electrodes applied to the outer circumferential surface of the tube 3 may be divided into two subgroups of four electrodes each, shifted with respect to each other along the axial (z) direction. The first subgroup consists of electrodes S1 to S4, while the second subgroup consists of electrodes S5 to S8. All electrodes have the same rectangular shape, covering almost a quarter of the circumference of the tube (a quadrant). The electrodes within each subgroup are distributed uniformly over the circumference of the tube, i.e. the centers of the four electrodes of each subgroup are located at positions 0°, 90°, 180° and 270° along the circumference of the tube, and their central normal vectors point into the corresponding spatial directions (the x, y, -x and -y directions). The second subgroup is identical to the first subgroup, however, shifted with respect to the first subgroup along the axial direction by somewhat more than the length of one single electrode. Conceptually, the electrode arrangement may be viewed as an arrangement of four segmented, elongated rectangular electrodes distributed uniformly over the circumference of the tube, wherein each segmented electrode has been divided axially into two separate sub-electrodes.

The working principle of the device is piezoelectric. Any load applied on the piezoelectric tube 3 creates strains in the piezoelectric material, which is converted by the direct piezoelectric effect into electric displacement. Changes in electric displacements lead to surface charges, which are collected on the electrodes and may be measured as voltages by external instruments.

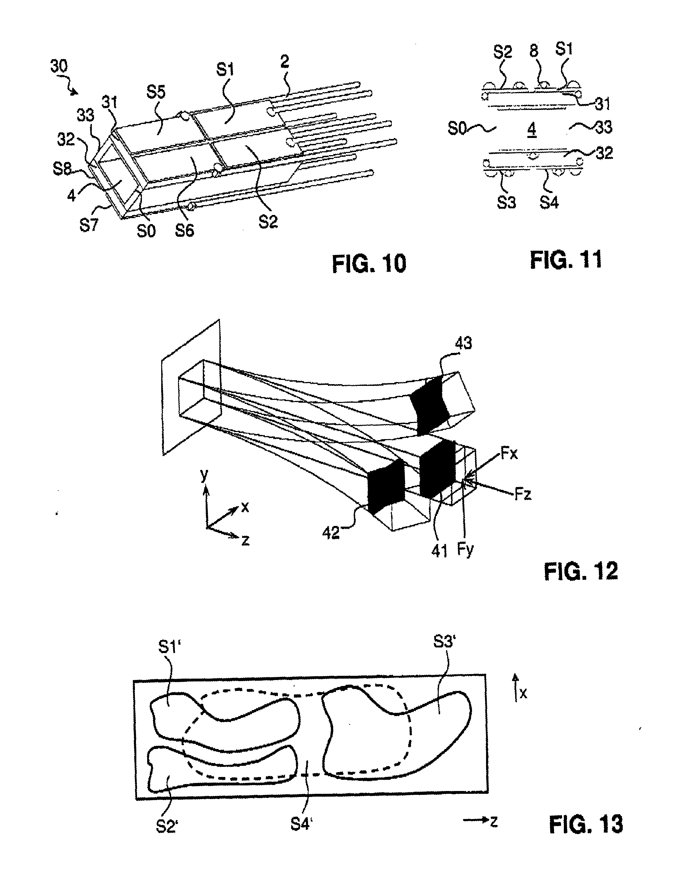

In particular, application of a force in the z direction creates uniform axial strain in the piezoelectric tube, as illustrated in the strain profile 41 of Fig. 12. Thereby, a uniform, symmetric charge distribution will be created between the inner and outer tube surface, the axis of symmetry being the z axis. The resulting charge distribution is given in Table 1 below. This causes a uniform voltage on each of the outer electrodes S1 to S8 relative to the inner electrode S0.

In contrast, a force along the x or y direction will create a bending stress, and as a result an anti-symmetric strain profile is created in the tube (see strain profiles 42 and 43 in Fig. 12). This causes an anti-symmetric charge distribution on the electrodes, as given again in Table 1 below. However, the charge distribution will generally not be uniform along the z axis. In particular, if the tube is fixed at one end ("cantilevered"), application of a force to the other end will create an approximately linear charge profile along the z axis. Nonuniform charge profiles will also result for any other local application of force.

A moment around the x or y axis, on the other hand, will create a generally similar strain profile as a force along the y or -x axis, respectively, however, strain will be uniform along the z direction, and the corresponding charge distribution will therefore also be uniform.

A moment around the z axis will create a charge profile that cannot be picked up well with the device of Figs. 1 to 3, without providing additional electrodes, and will therefore not be considered further here.

The different charge distributions and the different corresponding voltage distributions on the outer electrodes (relative to the inner electrode) can be separated easily by a simple logical circuit or by well-known numerical techniques. For a generic load applied to the device, the contributions of the different degrees of freedom can thereby be easily separated.

| **Table 1** | | | | | | |
|---|---|---|---|---|---|---|
| | Fz | Fx | Fy | Mz | Mx | My |
| S1 | Q₁ | Q₁ | Q₁ | - | Q₃ | Q₃ |
| S2 | Q₁ | Q₁ | -Q₁ | - | -Q₃ | Q₃ |
| S3 | Q₁ | -Q₁ | -Q₁ | - | -Q₃ | -Q₃ |
| S4 | Q₁ | -Q₁ | Q₁ | - | Q₃ | -Q₃ |
| S5 | Q₁ | Q₂ | Q₂ | - | Q₃ | Q₃ |
| S6 | Q₁ | Q₂ | -Q₂ | - | -Q₃ | Q₃ |
| S7 | Q₁ | -Q₂ | -Q₂ | - | -Q₃ | -Q₃ |
| S8 | Q₁ | -Q₂ | Q₂ | - | Q₃ | -Q₃ |

**Table 1:** Comparison of the charges created by the different loads applied on the sensor. Q1, Q2 and Q3 designate charges of arbitrary magnitude.

The electrodes form the sensor output of the device, and this sensor output will be connected to a signal processing device comprising, e.g., an amplifier (depending of the force range needed to be measured) and/or an impedance converter, and a readily commercially available Data Acquisition Card, here, an eight-channel card. A suitable electric circuit will be described further below. A general-purpose computer may then serve to calculate forces and torques from the sensor output.

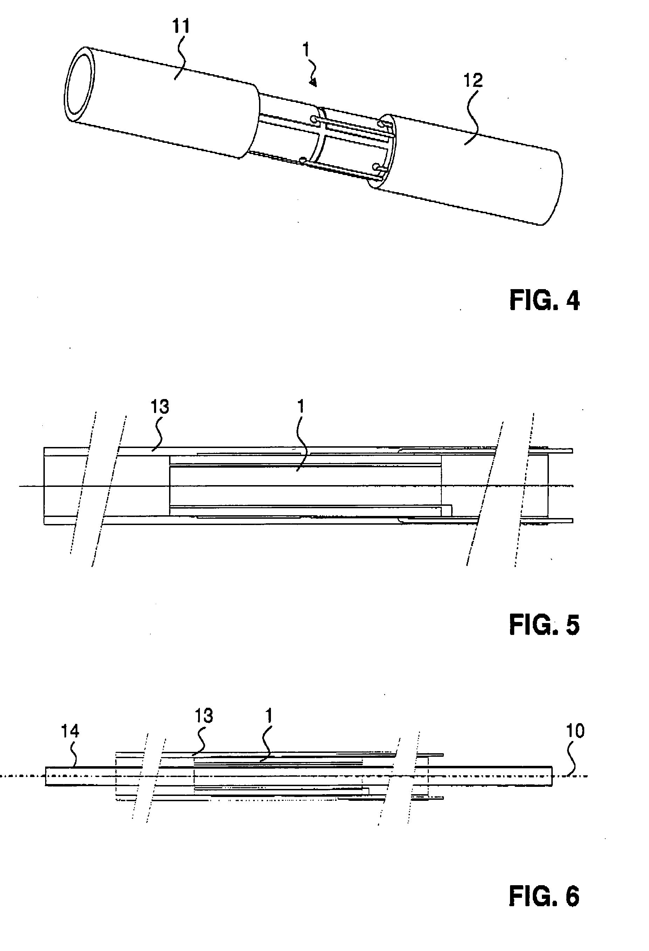

In Fig. 4, the piezoelectric device 1 is shown together with two tube-shaped force induction elements 11 and 12. These elements are fixed to the end portions of the tube in a region of the tube where there are no outer electrodes. Any force applied to the force induction elements 11 and 12 is transferred to the tube and can be detected by the piezoelectric device 1.

Instead of two separate force induction elements 11 and 12, the piezoelectric device 1 may also be fully embedded in a single tubular force induction element 13, extending axially away from both ends of the device, as illustrated in Fig. 5.

An important advantage of the piezoelectric device of the present invention is the possibility to pass another element, such as a tool, through the central bore 4 without interfering with the operation of the device. This is illustrated in Fig. 6. Here, a rod-shaped tool 14 is passed through the central bore of the device 1, along the longitudinal axis 10, without contacting the inner electrode of the device. Instead of a tool, also any other suitable structure such as cables, tubes etc. may be passed through the central bore.

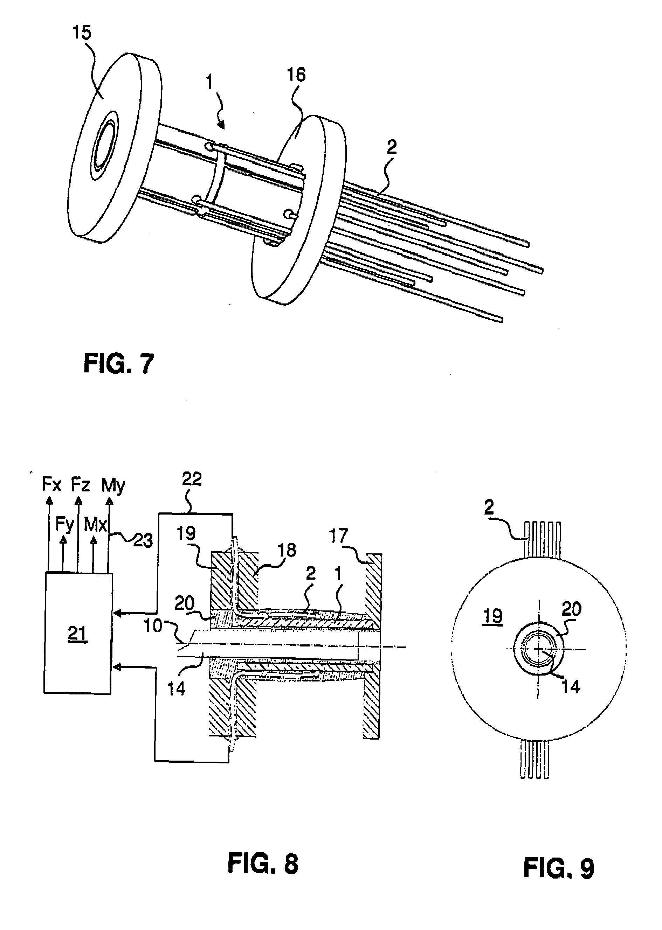

In Fig. 7 the device is shown with force induction elements 15 and 16 that have the shape of a circular disk. The connecting wires 2 are passed away from the device in the axial direction.

Figure 8 illustrates a slightly different, but related embodiment. In this embodiment, the connecting wires 2 are passed to the radial circumferential surface of one of the force induction elements. To this end, a second disk 19 is connected to the device at an axial distance to a first disk 18 mounted on one end of the tube, and the wires 2 are fed through between the two disks. The remaining interstitial space between the disks is filled with an electrically insulating adhesive mass 20. At the other end of the tube, a single disk-shaped force induction element 17 similar to those of Fig. 7 is provided. The adhesive mass 20 also covers and protects the radial outer surface of the piezoelectric device 1.

Figure 8 also illustrates how the wires may be connected to an signal processing device 21. The signal processing device 21 receives eight input values 22 in the form of voltage differences between the eight outer electrodes S1-S8 and the inner reference electrode S0, and derives five output values from these input values, the output values corresponding to forces Fx, Fy and Fz and torques Mx and My, by numerically inverting the charge-load relationship of Table 1. To this end, the signal processing device comprises an analog-to-digital converter (ADC) and a processor, the ADC receiving the input voltages and converting the voltages into digital voltage values, and the processor determining, from the digital voltage values, the output values 23 representing said forces and torques. These output values may be displayed on a monitor screen, written to a memory for logging, or may be further processed in any conceivable way. Numerical methods for "inverting" the matrix of Table 1 to obtain the output values from the input values are well known in the art.

For performing a self test, the signal processing device may comprise a voltage source or an oscillator for exciting a vibration of the piezoelectric device 1 in a self-testing mode. In this mode, the voltage source or oscillator provides excitation voltages to at least two or to all of the outer electrodes for exciting a vibration of the tube. After the excitation voltages have been switched off, the resulting vibrational mode is detected by measuring voltages at the electrodes and comparing these to the expected voltages. Any differences exceeding a predetermined threshold will then indicate a failure of the device. Other modes of operation of the self-test facility are of course possible, such as simultaneous excitation at some of the electrodes and detection at other electrodes.

It is to be understood that the signal processing device may also be constructed in a different way, e.g. in purely analog circuitry or by employing a general-purpose computer equipped with a data acquisition card, and that the use of such a unit is not limited to the specific piezoelectric device shown in Fig. 8.

In Figures 10 and 11 a second preferred embodiment of a piezoelectric device according to present invention is shown. Like features are provided with like reference signs as in the first embodiment. The device comprises a main body 30 comprising two rectangular, platelike piezoelectric layers 31 and 32, which are arranged in a parallel configuration and are separated along the y direction by a central spacer element 33. The spacer element is manufactured from an electrically conducting material, in particular from a metal, and thereby forms the central inner electrode S0. The spacer element has a central bore 4, passing through the piezoelectric device along the z direction. On the outer surface of each of the piezoelectric layers 31, 32 facing away from the spacer, four electrodes are disposed. All electrodes have the same rectangular shape and the same size. The electrodes on each of the piezoelectric layers are disposed in identical rectangular arrangements. The electrodes can again be separated into two subsets of four electrodes each. The first subset consists of those four electrodes on the upper and lower piezoelectric layer 31, 32 that are closer to the first end of the device. These four electrodes are again designated as S1 to S4. The second subset consists of those four electrodes on the upper and lower layer that are closer to the second end of the device. These electrodes are designated as S5 to S8.

The working principle of the device is very similar to the device of figure 1, and forces and torques associated with five degrees of freedom may again be separated in the same manner as given in Table 1 above. Of course, also force induction elements similar to those of the first embodiment, in particular, disk- or tube-shaped force induction elements similar to those shown in Figs. 5-9, may be used together with the device according to the second embodiment.

Figure 13 illustrates in a very schematic fashion an alternative electrode arrangement for the device of the second embodiment. On the outside of the upper piezoelectric layer, three outer electrodes S1', S2' and S3' are disposed, shown in solid lines, while on the outside of the lower layer, one single electrode S4' is disposed, shown in broken lines. The reference electrode between the two piezoelectric layers, formed again by the spacer, is not shown in this schematic illustration. Such a device will allow for separation of four degrees of freedom: forces in the x, y and z direction and torque around the x axis. It is readily apparent from this exemplary illustration that an infinite number of other electrode arrangements will be possible to achieve separation of at least four degrees of freedom, not only for the second embodiment, but also for the first, tubular embodiment.

The devices described above not only be used for detecting loads, but may also be used to generate loads (forces and torques) associated with at least four different degrees of freedom, instead of measuring such loads, simply by applying corresponding voltages to the electrodes. In particular, for the electrode arrangement of Fig. 1 or Fig. 10, voltages as given in Table 1 may be applied to generate forces Fx, Fy, and Fz and torques Mx and My.

If the piezoelectric devices above are used as a sensor, the following problems that are typical to high impedance sources may occur:
1) Crosstalk between the different signals in the data acquisition (DAQ) card. About 14%-90% of the signal entering through one acquisition (AI) channel could be detected in a different AI channel.
2) Influence of external electrical fields on the sensor. By moving a human body in the proximity of the sensor the signal changed by 10% depending on the external capacitor that was used.
3) Drift of the signal due zero currents in the op amps of the signal, up to 0.4 mV/s.
4) Decay of the output signal of a constant force input (when measured by a standard scope with an input resistance of 60 MOhm).

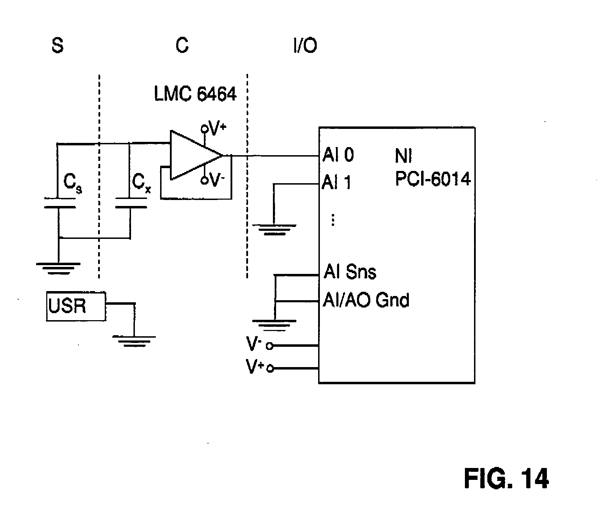

For addressing such problems, Figure 14 illustrates an advantageous setup for signal conditioning of the sensor output. Each electrode of the sensor may be connected to a circuit like the one shown in Fig. 14. The sensor S is modeled as a sensor capacitance Cₛ. This capacitance is connected in parallel to an external capacitor, Cₓ. The sensor output is fed to a signal conditioning circuit C acting as an impedance converter, based on an LMC6464 op-amp which was chosen because of its low bias current and offset current. This conditioning circuit (supply voltages +V/-V) has a high internal resistance (approx. 10 TOhm) which enables readout of DC signals. The DAQ card National Instruments NI-6014 was chosen because of its high input resistance, 100 GOhm. Between each signal from the sensor a ground-connected input to the DAQ card may be provided to reduce cross talk. The user USR of the sensor, the AI Sns common input and the AI/AO GND may also be connected to the same ground.

As a result of these measures we applied the problems above were significantly reduced:
1) Crosstalk is not observable.
2) The influence of external fields reduced to 0.3% from the full scale signal.
3) The drift was reduced by two orders of magnitude to about 33 µV/s.
4) The DC signal can be measured due to the DAQ card's and converter's high internal resistance.

From the foregoing examples, it will be apparent that many modifications are possible without leaving the scope of the invention, and the invention shall not be construed as limited by these examples.

**LIST OF REFERENCE SIGNS**

| | | | |
|---|---|---|---|
| 1 | piezoelectric device | 30 | main body |
| 2 | connecting wire | 31,32 | piezoelectric layer |
| 3 | piezoelectric tube | 33 | spacer element |
| 4 | bore | 41-43 | strain profile |
| 5 | inner electrode | S1-S8, S1'-S4' | electrodes |
| 7 | outer electrode | x, y, z | directions |
| 8 | wire connection | Fx, Fy, Fz | forces |
| 10 | longitudinal axis | My, Mz | torques |
| 11, 12 | force induction tube | S | sensor |
| 13 | protective cover | C | conditioning circuit |
| 14 | shaft | I/O | input/output device |
| 15-19 | disk | V+, V- | supply voltages |
| 20 | adhesive mass | USR | user model |
| 21 | signal processing device | Cₛ | sensor capacitance |
| 22 | input values | Cₓ | external capacitor |
| 23 | output values | | |

## Claims

1. A sensor device comprising:
(a) a piezoelectric device, the piezoelectric device comprising:
a hollow main body (3; 30) defining a hollow region (4), the main body having an inner surface facing the hollow region and an outer surface facing away from the hollow region, the main body comprising at least one piezoelectric portion made from a piezoelectric material; and
a set of electrodes (S0-S8 on the piezoelectric portion, the electrodes being distributed over the inner surface and the outer surface of the main body in a manner to allow to distinguish surface charge distributions corresponding at least to a force along a first direction and to a torque around a second direction perpendicular to the first direction,
(b) a signal processing device (21) electrically connected to the set of electrodes (S0-S8), the signal processing device being specifically adapted to receive a plurality of input values (22) corresponding to potential differences between the electrodes and to determine from said input values at least two output values (23), the output value representing at least said force along said first direction and said torque around said second direction.

2. The sensor device as claimed in claim 1, wherein the main body (3; 30) has a first end and a second end, a longitudinal axis (10) extending from the first end to the second end, the hollow portion (4) extending along the longitudinal axis, and wherein the set of electrodes (S0-S8) comprises at least two electrodes on one surface selected from the inner and outer surface, said two electrodes covering a sector along a circumferential direction around the longitudinal axis and being located at different positions along an axial direction (z) parallel to the longitudinal axis, and at least one electrode (SO) on the other surface.

3. The sensor device as claimed in claim 1 or 2, wherein the set of electrodes (S0-S8) comprises a first (S1-S4) and a second subset (S5-S8) of electrodes, the electrodes of both subsets being present on one surface selected from the inner surface and the outer surface, each subset comprising at least two electrodes at different positions along a circumferential direction around a longitudinal axis of the device, and each electrode of the second subset (S5-S8) being disposed at a different location along the longitudinal axis than each electrode of the first subset (S1-S4), and wherein the set of electrodes comprises at least one electrode on the other surface.

4. The sensor device as claimed in claim 3, wherein the first and second subset of electrodes comprise the same number of electrodes.

5. The sensor device as claimed in claim 4, wherein each of the first and second subset of electrodes comprises four electrodes.

6. The sensor device as claimed in claim 4 or 5, wherein all electrodes of the first and second subset have the same surface area.

7. The sensor device as claimed in any of claims 3 to 6, wherein each electrode in each subset of electrodes is arranged in a diametrically opposing relationship to one electrode in the same subset.

8. The sensor device as claimed in any of claims 1 to 7, wherein the main body (3) has a hollow cylindrical shape defining a longitudinal axis (10) and having an inner and an outer circumferential surface, the inner circumferential surface forming the inner surface of the main body, and the outer circumferential surface forming the outer surface of the main body.

9. The sensor device as claimed in claim 8, wherein the set of electrodes comprises at least one inner electrode (S0) on the inner circumferential surface and a first (S1-S4) and a second subset (S5-S8) of electrodes on the outer circumferential surface, each subset comprising four segmented outer electrodes of substantially equal size and shape located in a substantially identical axial position and distributed substantially uniformly along a circumferential direction, each electrode of the first subset (S1-S4) being adjacent to a corresponding electrode (S5-S8) of the second subset along an axial direction.

10. The sensor device as claimed in any of claims 1 to 7, wherein the main body (30) comprises a first piezoelectric layer (31) having an inner surface and an outer surface, a second piezoelectric layer (32) having an inner surface and an outer surface, and a hollow spacer (33) disposed between the inner surface of the first piezoelectric layer and the inner surface of the second piezoelectric layer, the set of electrodes (S0-S8) comprising at least one outer electrode being applied to the outer surface of each of the first and second piezoelectric layers, and at least one inner electrode (SO) being applied to the inner surface of the first piezoelectric layer and the inner surface of the second piezoelectric layer.

11. The sensor device as claimed in claim 10, wherein the hollow spacer (33) is made from an electrically conducting material, forming the inner electrode (SO) of the piezoelectric device.

12. The sensor device as claimed in claim 10 or 11, wherein the set of electrodes comprises four outer electrodes (S1, S2, S5, S6) disposed on the outer surface of the first piezoelectric layer (31) and four outer electrodes (S3, S4, S7, S8) disposed on the outer surface of the second piezoelectric layer (32), the electrodes on the outer surfaces of each piezoelectric layer having identical shape and size, the electrodes on each of the first and second layers being arranged in identical rectangular arrangements, each electrode on the first piezoelectric layer facing a corresponding electrode on the second piezoelectric layer across the spacer (33).

13. The sensor device as claimed in claimed in any of the preceding claims, wherein the main body has a first end, a second end, and a longitudinal axis (10) extending from the first end to the second end, the hollow portion (4) extending along the longitudinal axis, the device comprising a first force induction element (31; 15; 17)) disposed near the first end of said main body.

14. The sensor device as claimed in any of the preceding claims, wherein the signal processing device comprises a data acquisition device for digitizing said input values and a plurality of signal conditioning circuits (C), each signal conditioning circuit having an input being connected to at least one of said electrodes (S0-S8) and having an output being connected to said data acquisition device, each signal conditioning circuit acting as an impedance converter having an input impedance that is higher than its output impedance.

15. Use of a piezoelectric device according to any of claims 1 to 14 for determining loads selected from forces and torques associated with at least four different degrees of freedom.
